# DEMANDE DE BREVET EUROPEEN

(11) **EP 1 813 898 A1**
(43) Date de publication de la demande: **01.08.2007**
(21) Numéro de dépôt: 06300079.8
(22) Date de dépôt: 30.01.2006
(51) Int. Cl.: F25D 29/00, F25D 3/10

(54) **Système pour l'exploitation et la gestion d'un parc de contenants autonomes réfrigérés**

(71) Demandeur: L'AIR LIQUIDE, Société Anonyme pour l'Etude et l'Exploitation des Procédés Georges Claude, 75007 Paris (FR)
(72) Inventeur: WEIDLICH, Jochen, 78280, GUYANCOURT (FR); JOUVAUD, Dominique, 75015, PARIS (FR); KOSTELITZ, Michel, 78000, VERSAILLES (FR); MOREL-JEAN, Serge, 78180, MONTIGNY LE BRETONNEUX (FR)
(74) Mandataire: Mellul-Bendelac, Sylvie Lisette

(57) **Abrégé**

Système pour l'exploitation et la gestion d'un parc de contenants autonomes réfrigérés (1) pour le transport de denrées périssables, selon lequel:
- chacun des contenants (1) est muni d'un Tag passif (2) comportant une information d'identification du contenant considéré, ainsi que d'un Tag actif (3) comprenant une sonde de température, un enregistreur relié a ladite sonde et apte à enregistrer des valeurs de température mesurées par ladite sonde;
- le système comprend un pistolet ou moyen d'injection (4) d'un fluide frigorifique dans le contenant, moyen qui est muni d'un dispositif (5) apte à lire le Tag passif du contenant qui lui est présenté, afin notamment de prendre connaissance du numéro d'identification du Tag passif considéré;
- il comporte une unité (10) d'acquisition et de traitement de données, apte aux opérations suivantes:

- à recevoir dudit dispositif (5) ladite information d'identification, et à relier ce numéro d'identification de Tag passif avec le numéro du Tag actif se trouvant dans le contenant considéré;
- à calculer, en tenant compte de données Iiées au parcours logistique du contenant considéré et de données physiques du fluide, une quantité de gaz liquéfié à injecter dans le contenant considéré et à ordonner audit pistolet ou moyen d'injection (14) les caractéristiques de l'injection de gaz liquéfié à injecter dans le contenant considéré.

## Description

L'invention concerne le domaine du transport ou de la distribution des denrées alimentaires périssables et autres plats cuisinés ou aliments, en contenants isothermes, qu'il s'agisse par exemple de conteneurs ou de camions, où le maintien de la chaîne du froid est assuré par l'intervention d'un fluide frigorifique (gaz froid, liquide cryogénique tel l'azote liquide, neige carbonique...).

Ainsi à titre d'exemple, les cuisines centrales ou encore les centres de distribution utilisent des chariots isothermes pour transporter et distribuer des plats cuisinés ou des aliments de leurs cuisines ou plates-formes vers les lieux de consommation : restauration hospitalière, restaurants d'entreprise, scolaires etc....

On ne détaillera pas ici de façon exhaustive les très nombreuses configurations de contenants et de types de refroidissement qui sont disponibles sur le marché, et notamment les types conteneurs/chariots isothermes, avec ou sans compartiment cryogénique matérialisé, avec ou sans un réservoir ("cassette") comportant le fluide froid à insérer dans le conteneur etc...

Et de même le fluide frigorifique (gaz, liquide cryogénique, solide, qu'il s'agisse d'azote, de CO₂ ou autre...) peut être déposé directement dans le contenant, ou dans un réservoir à insérer dans le contenant, ou envoyé dans un échangeur situé dans le contenant, ou encore, toujours à titre illustratif, envoyé dans une capacité, située dans le contenant lui-même ou à proximité (ou encore accolé, par exemple quand le contenant est un camion), capacité à partir de laquelle on prélève du fluide pour l'envoyer vers le contenant, vers un réservoir situé dans le contenant, vers un échangeur situé dans le contenant etc....

On le voit à la lecture de ce qui précède les situations et configurations sont très variées.

A titre illustratif on peut néanmoins signaler que les chariots/conteneurs cryogéniques sont typiquement de forme parallélépipédique, ils comprennent très souvent un compartiment cryogénique disposé dans la partie supérieure du conteneur, au-dessus du compartiment de stockage où sont disposés les produits devant être conservés à température contrôlée, et traditionnellement, ce compartiment supérieur reçoit un réservoir destiné à contenir un produit réfrigérant, par exemple du dioxyde de carbone en phase solide, dont la sublimation libère des gaz froids, compensant les entrées de chaleur à travers les joints entre le conteneur et sa porte ou encore à travers l'isolant du conteneur. Les plats cuisinés (ou autres produits périssables) sont alors logés dans le compartiment de stockage produits de ces conteneurs isothermes, qui sont eux-mêmes transportés dans des camions vers le site utilisateur (hôpital, cantine scolaire, ...).

On sait bien que la réglementation en vigueur concernant le respect de la chaîne du froid pour le transport des denrées alimentaires périssables devient de plus en plus rigoureuse, et conduit notamment les acteurs de telles distributions d'aliments à évoluer en terme de préparation et de traçabilité des produits à transporter.

En pratique, on constate que l'opérateur chargé de l'injection du fluide dans chaque contenant, par exemple dans chaque conteneur, l'effectue de façon relativement empirique, au mieux en fonction d'un certain nombre de "recettes" préétablies (boutons au niveau de l'armoire injection qu'il actionne permettant la mise en oeuvre de durées d'injection différentes et prédéterminées).

Or l'expérience montre que la quantité de fluide nécessaire dans chaque cas dépend de nombreux facteurs qui ne sont aujourd'hui pas suffisamment bien pris en compte, et qui sont liés notamment au parcours du contenant entre son chargement et son lieu final d'utilisation (parcours "logistique").

On conçoit alors que de telles méthodes approximatives seront de moins en moins compatibles avec les exigences croissantes des nouvelles réglementations qui demandent un contrôle et un suivi beaucoup plus rigoureux des températures tout au long du parcours de tels contenants, voire de chaque contenant.

Un des objectifs de la présente invention est alors de proposer une nouvelle méthode de gestion de tels contenants, et notamment de leur chargement en fluide frigorifique, permettant d'améliorer la situation précédemment décrite.

Comme on le verra ci-dessous plus en détail, la présente invention apporte une solution technique au problème précédemment évoqué par un nouveau système de gestion de tels contenants (par exemple des conteneurs isothermes ou encore des camions) permettant de discriminer un contenant donné, au sein d'une population de contenants, ce qui dans l'état actuel de cette technique n'est absolument pas réalisé.

Seule une telle discrimination permet en effet d'adapter l'injection et de l'automatiser en tenant compte notamment des critères suivants :
- Les distances entre les cuisines ou plates-formes et les points de livraison finaux;
- Les données physiques des contenants et celles du fluide frigorifique;
- Les durées d'attente aux différentes étapes, de transport, les heures de consommation ou de livraison;
- Les températures de maintien visées;
- Les conditions extérieures environnantes ;
Etc....

Comme on le verra également ci-dessous plus en détail, la présente invention apporte une solution technique qui permet d'informer et alarmer les utilisateurs d'une façon simple, des dépassements de température à l'intérieur du contenant pendant les diverses phases de transport, et qui permet d'historiser localement dans chaque contenant les valeurs de température et les alarmes de dépassement.

Selon la présente invention, on équipe chaque contenant d'une combinaison d'un Tag d'identification passif et d'un Tag actif de mesure de températures. Et l'on verra ci-dessous que seule cette combinaison des deux types de Tag permet d'atteindre la discrimination et donc l'efficacité recherchées.

On rappellera que la littérature parle indifféremment de "Tag" ou "puce" ou "micropuce" RFID (pour Radio Frequency IDentification).

On n'insistera pas ici trop longuement sur ces dispositifs qui sont bien connus de l'homme du métier, qui sont bien répertoriés et commercialement disponibles sous de multiples formes :
- ils sont dits "passifs" quand ils ne sont pas munis d'une batterie ou pile ou source d'énergie propre, ils ne peuvent dès lors émettre par eux-mêmes des données, sans avoir été sollicités par une antenne qui les auraient activés (antenne de l'appareil de lecture qui émet un signal radio pour activer et identifier le Tag, et pour écrire ou lire des données).
   Ces Tags passifs contiennent en revanche une sorte de signature électronique apte à être transmise à un système de supervision quand le Tag est sollicité.
   Mais leur portée est en pratique très faible (inférieure à 2 mètres).
- ils sont dits "actifs" quand au contraire ils sont munis d'une source d'énergie propre (batterie), et donc capable d'émettre par eux-mêmes, même sans être sollicités pour le faire.

Leur portée peut en revanche atteindre couramment une centaine de mètres.

Selon la présente invention :
- le pistolet ou système d'injection du fluide frigorifique (qu'il s'agisse de gaz froid, de liquide cryogénique, ou encore de solide) dans le contenant est muni d'un lecteur de Tag passif et de son antenne associée (ou bien d'une antenne apte à lire le Tag passif du contenant qui lui est présenté, antenne qui est connectée à un lecteur de Tag passif déporté), afin de lire automatiquement le numéro d'identification du Tag passif en question ;
- le pistolet ou système d'injection transmet cette information d'identification à une unité d'acquisition et de traitement de données (superviseur), qui va relier le numéro d'identification de Tag passif qui lui a été transmis avec le numéro de Tag actif se trouvant dans le même contenant considéré ;
- l'installation est par ailleurs munie d'un lecteur muni d'une antenne qui permet de lire les données du Tag actif considéré (ce lecteur est situé en tout endroit approprié de l'installation, par exemple dans le superviseur, et en tout cas en une localisation dans la portée du Tag actif considéré).

Comme on l'a vue précédemment, la notion d'injection de fluide « dans le contenant » peut prendre de multiples formes (dans le contenant proprement dit, dans un réservoir cryogénique, dans un échangeur, dans une capacité tampon etc...).

Le Tag actif comprend avantageusement une sonde de température, ainsi qu'un transpondeur enregistreur permettant de stocker les mesures de températures à une fréquence définie en fonction des besoins pendant un temps déterminé ainsi qu'une base de données contenant les caractéristiques du contenant.

On notera que plusieurs configurations peuvent être envisagées : une sonde de température intégrée dans le corps du Tag actif, ou bien une sonde déportée, reliée au corps du Tag par un câble. On conçoit dans tous les cas qu'à tout le moins la partie sonde doive être positionnée en un endroit approprié du contenant pour être en mesure de fournir des mesures représentatives de la température régnant dans l'ambiance de stockage des produits.

L"ensemble est relié à l'unité d'acquisition et de traitement de données, apte à recevoir les données et évènements, les traiter, à assurer une bonne communication avec tous les systèmes d'information actuels, mais aussi à contrôler de façon automatique l'injection de fluide, c'est-à-dire à ordonner au pistolet ou moyen d'injection - ou au système de vannes gérant l'alimentation du pistolet - les caractéristiques de l'injection de fluide (quantité, durée...).

Les données du parcours logistique de chaque contenant sont avantageusement stockées dans une base de données au niveau du superviseur, reliant les données du parcours logistique au Numéro d'identification inscrit sur le Tag passif du contenant considéré. En tenant compte de ces données du parcours logistique et des données physiques du fluide, une quantité de fluide est calculée et injectée dans le contenant considéré.

En résumé, le superviseur peut différencier chaque contenant, récupérer les enregistrements de températures, lire les informations du processus inscrites dans le Tag, gérer l'injection de fluide, écrire dans le Tag actif les données relatives au processus (par exemple des instructions : le Tag doit mesurer et stocker la température régnant dans le contenant à partir de tel moment et avec telle périodicité), lancer l'enregistrement des températures etc...mais également stocker toutes les informations et les mettre à disposition des intéressés par les moyens actuels de communication.

Et c'est l'association selon l'invention d'un TAG passif et d'un TAG actif qui permet de discriminer chaque contenant, et ainsi d'associer avec une parfaite discrimination toutes les données et évènements, et notamment toutes les données et évènements liés au parcours de chaque contenant, contribuant ainsi si nécessaire à la construction et l'alimentation d'une base de données d'un système de type « HACCP ».

Et compte tenu des caractéristiques de portée des Tags passifs et actifs, on conçoit toute l'importance et le rôle du Tag actif selon la présente invention, pour que le superviseur puisse, aussi souvent que nécessaire, par exemple de façon programmée ou sur demande spécifique d'un opérateur, être en mesure de balayer un espace donné et de faire l'inventaire de tous les contenants présents dans cet espace i.e de tous les Tags actifs se trouvant dans cet espace, repérant au besoin tous les contenants qui lui sont pour le moment inconnus (par exemple du fait qu'ils reviennent d'une opération de maintenance ayant nécessité le changement du Tag actif) pour en faire la liste, associer à chaque Tag actif repéré le N° de Tag passif associé pour chaque contenant (N° de Tag passif situé par exemple dans le Tag actif que l'unité vient de repérer et d'interroger) - ce qui fait que lorsque le contenant considéré se présentera ultérieurement devant le pistolet ou moyen d'injection pour injection de fluide il sera alors reconnu et correctement traité - et déterminer en fonction du parcours logistique de chaque contenant et de ses caractéristiques l'injection de fluide à lui appliquer.

En d'autres termes et compte tenu du problème technique à la base de la présente invention, on comprend que la présence du Tag actif est tout particulièrement importante pour répondre aux nécessités :
- de traçabilité, d'historisation;
- de reconnaissance à distance d'un contenant donné dans une population de contenants, pour ensuite induire la reconnaissance du contenant lorsque celui-ci se présente à l'injection de fluide frigorifique via son Tag passif.

L'invention concerne alors un système pour l'exploitation et la gestion d'un parc de contenants réfrigérés pour le transport de denrées périssables, contenants aptes à être alimentés en fluide frigorifique, caractérisé par la mise en oeuvre des mesures suivantes :
- chacun des contenants est muni d'un Tag passif comportant une information d'identification du contenant considéré, ainsi que d'un Tag actif comprenant une sonde de température ainsi qu'un enregistreur relié à ladite sonde et apte à enregistrer des valeurs de température mesurées par ladite sonde ;
- le système comprend un pistolet ou moyen d'alimentation du contenant en fluide frigorifique, moyen qui est muni d'un dispositif apte à lire le Tag passif du contenant qui lui est présenté, afin notamment de prendre connaissance du numéro d'identification du Tag passif considéré ;
- une unité d'acquisition et de traitement de données, apte aux opérations suivantes :
   - à recevoir dudit dispositif apte à lire le Tag passif ladite information d'identification, et à relier ce numéro d'identification de Tag passif avec le numéro du Tag actif se trouvant dans le contenant considéré;
   - à calculer, en tenant compte d'une ou plusieurs données liées au parcours logistique du contenant considéré, aux caractéristiques de structure et d'isolation du contenant considéré, aux données physiques du fluide utilisé, une quantité de fluide à injecter dans le contenant considéré et à ordonner audit pistolet ou moyen d'injection les caractéristiques de l'injection de fluide à réaliser dans le contenant considéré.

Le système selon l'invention pourra par ailleurs adopter l'une ou plusieurs des caractéristiques suivantes :
- les contenants gérés sont des conteneurs, du type comportant un compartiment cryogénique et un compartiment de stockage des produits, et muni d'une connectique permettant notamment son raccordement à une source du fluide frigorifique ;
- les contenants gérés sont des camions ;
- ledit dispositif apte à lire le Tag passif est constitué d'un lecteur de Tag passif et de son antenne associée ou bien d'une antenne apte à lire le Tag passif qui lui est présenté, antenne qui est connectée à un lecteur de Tag passif déporté ;
- le système comporte une antenne qui permet de lire les données dudit Tag actif.

L'invention concerne également un procédé pour l'exploitation et la gestion d'un parc de contenants réfrigérés pour le transport de denrées périssables, contenants aptes à être alimentés en un fluide frigorifique, caractérisé par la mise en oeuvre des mesures suivantes :
- chacun des contenants est muni d'un Tag passif comportant une information d'identification du contenant considéré, ainsi que d'un Tag actif comprenant une sonde de température ainsi qu'un enregistreur relié à ladite sonde et apte à enregistrer des valeurs de température mesurées par ladite sonde ;
- on dispose d'un pistolet ou moyen d'alimentation du contenant en fluide frigorifique, moyen qui est muni d'un dispositif apte à lire le Tag passif du contenant qui lui est présenté, afin notamment de prendre connaissance du numéro d'identification du Tag passif considéré ;
- on dispose d'une unité d'acquisition et de traitement de données, et l'on procède, à l'aide de cette unité aux opérations suivantes :
   - on reçoit dudit dispositif ladite information d'identification, et l'on relie ce numéro d'identification de Tag passif avec le numéro du Tag actif se trouvant dans le contenant considéré;
   - on calcule, en tenant compte d'une ou plusieurs données liées au parcours logistique du contenant considéré, aux caractéristiques de structure et d'isolation du contenant considéré, aux données physiques du fluide utilisé, une quantité de fluide à injecter dans le contenant considéré ;
   - on ordonne audit pistolet ou moyen d'injection ou à un système de vannes alimentant ledit pistolet ou moyen d'injection, les caractéristiques de l'injection de fluide à réaliser dans le contenant considéré.

Selon l'un des modes de mise en oeuvre de l'invention, l'unité d'acquisition et de traitement de données effectue, aussi souvent que nécessaire, de façon programmée ou sur demande spécifique d'un opérateur, un balayage d'un espace donné où est situé le parc de contenants, de façon à faire l'inventaire de tous les contenants présents dans cet espace au travers de tous les Tags actifs associés se trouvant dans cet espace.

Selon l'un des modes de mise en oeuvre de l'invention, ledit balayage permet de repérer au sein du parc se trouvant dans l'espace tous les contenants qui sont à l'instant du balayage, inconnus de l'unité et l'unité effectue alors la liste desdits contenants qui lui sont inconnus, en associant à chaque Tag actif repéré le numéro de Tag passif associé pour chaque contenant.

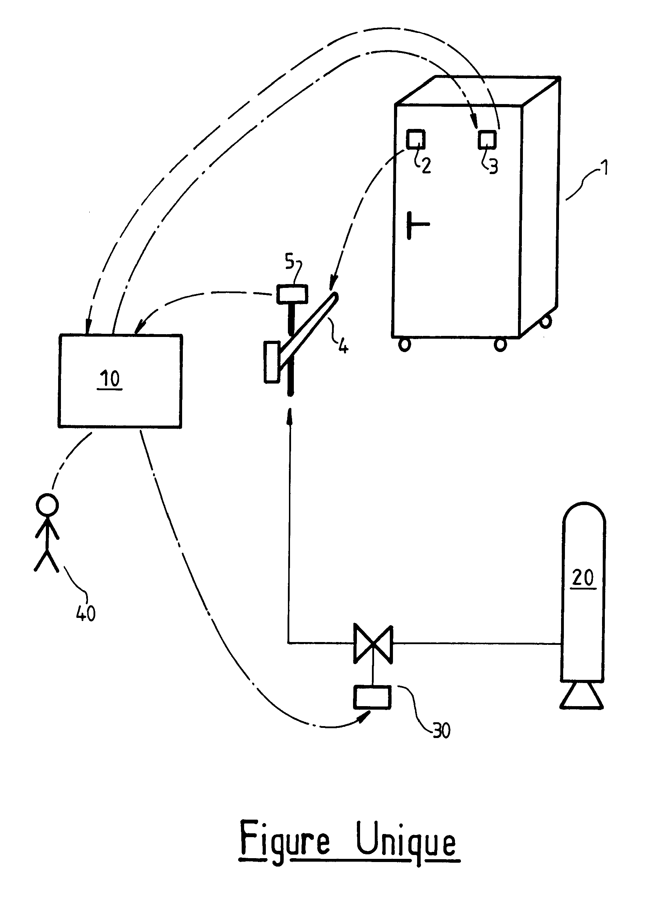

D'autres caractéristiques et avantages ressortiront de la description suivante, donnée uniquement à titre d'exemple et faite en référence à la figure unique annexée qui est une représentation schématique d'un mode de réalisation de l'invention.

On reconnaît sur la figure un contenant 1, ici un conteneur isotherme de type « armoire » ou « chariot », du type comportant un compartiment cryogénique et un compartiment de stockage des produits, et muni d'une connectique permettant notamment son raccordement à une source du fluide frigorifique (non représentés sur la figure par soucis de lisibilité, puisque bien connus par ailleurs de l'homme du métier).

On reconnaît par ailleurs les éléments suivants :
- le conteneur 1 est muni d'un Tag passif 2 comportant une information d'identification du contenant considéré, ainsi que d'un Tag actif 3 comprenant une sonde de température ainsi qu'un enregistreur relié à ladite sonde et apte à enregistrer des valeurs de température mesurées par ladite sonde ;
- un pistolet 4 d'alimentation du conteneur en fluide frigorifique (à partir d'une source 20 de fluide, par exemple une source d'azote liquide ou encore de CO₂ liquide), apte à se connecter sur la connectique du conteneur 1, pistolet qui est muni d'un dispositif 5 apte à lire le Tag passif 2 du contenant qui lui est présenté, afin notamment de prendre connaissance du numéro d'identification du Tag passif considéré ;
- une unité 10 d'acquisition et de traitement de données, apte aux opérations suivantes :
   - à recevoir dudit dispositif 5 ladite information d'identification du conteneur 1, et à relier ce numéro d'identification de Tag passif avec le numéro du Tag actif 3 se trouvant dans le conteneur considéré ;
   - à calculer, en tenant compte de données liées à l'une ou plusieurs des caractéristiques suivantes : au parcours logistique du contenant considéré, aux caractéristiques de structure et d'isolation du contenant considéré, ainsi qu'aux données physiques du fluide utilisé, une quantité de fluide à injecter dans le contenant considéré et à ordonner audit pistolet (au travers de la vanne 30) l'injection de fluide (quantité, durée) à réaliser dans le conteneur.

L'unité 10 est munie d'une antenne qui permet de lire les données des Tags actifs (tels que le Tag 3) entrant dans sa portée de lecture.

L'opérateur 40 est là par exemple et notamment pour rentrer dans l'unité d'acquisition et de traitement 10 les données du parcours logistique de chaque conteneur.

## Revendications

1. Système pour l'exploitation et la gestion d'un parc de contenants (1) réfrigérés pour le transport de denrées périssables, contenants aptes à être alimentés en fluide frigorifique, **caractérisé par** la mise en oeuvre des mesures suivantes :
- chacun des contenants est muni d'un Tag passif (2) comportant une information d'identification du contenant considéré, ainsi que d'un Tag actif (3) comprenant une sonde de température ainsi qu'un enregistreur relié à ladite sonde et apte à enregistrer des valeurs de température mesurées par ladite sonde ;
- le système comprend un pistolet ou moyen (4) d'alimentation du contenant en fluide frigorifique, moyen qui est muni d'un dispositif (5) apte à lire le Tag passif du contenant qui lui est présenté, afin notamment de prendre connaissance du numéro d'identification du Tag passif considéré ;
- une unité (10) d'acquisition et de traitement de données, apte aux opérations suivantes :
- à recevoir dudit dispositif (5) ladite information d'identification, et à relier ce numéro d'identification de Tag passif avec le numéro du Tag actif se trouvant dans le contenant considéré ;
- à calculer, en tenant compte d'une ou plusieurs données liées au parcours logistique du contenant considéré, aux caractéristiques de structure et d'isolation du contenant considéré, aux données physiques du fluide utilisé, une quantité de fluide à injecter dans le contenant considéré et à ordonner audit pistolet ou moyen d'injection les caractéristiques de l'injection de fluide à réaliser dans le contenant considéré.

2. Système selon la revendication 1, **caractérisé en ce que** les contenants gérés sont des conteneurs, du type comportant un compartiment cryogénique et un compartiment de stockage des produits, et muni d'une connectique permettant notamment son raccordement à une source du fluide frigorifique.

3. Système selon la revendication 1, **caractérisé en ce que** les contenants gérés sont des camions.

4. Système selon l'une des revendications précédentes, **caractérisé en ce que** ledit dispositif (5) apte à lire le Tag passif est constitué d'un lecteur de Tag passif et de son antenne associée ou bien d'une antenne apte à lire le Tag passif qui lui est présenté, antenne qui est connectée à un lecteur de Tag passif déporté.

5. Système selon l'une des revendications précédentes, **caractérisé en ce que** qu'il comporte une antenne qui permet de lire les données dudit Tag actif.

6. Procédé pour l'exploitation et la gestion d'un parc de contenants réfrigérés pour le transport de denrées périssables, contenants aptes à être alimentés en un fluide frigorifique, **caractérisé par** la mise en oeuvre des mesures suivantes :
- chacun des contenants est muni d'un Tag passif comportant une information d'identification du contenant considéré, ainsi que d'un Tag actif comprenant une sonde de température ainsi qu'un enregistreur relié à ladite sonde et apte à enregistrer des valeurs de température mesurées par ladite sonde ;
- on dispose d'un pistolet ou moyen d'alimentation du contenant en fluide frigorifique, moyen qui est muni d'un dispositif apte à lire le Tag passif du contenant qui lui est présenté, afin notamment de prendre connaissance du numéro d'identification du Tag passif considéré ;
- on dispose d'une unité d'acquisition et de traitement de données, et l'on procède, à l'aide de cette unité aux opérations suivantes :
- on reçoit dudit dispositif ladite information d'identification, et l'on relie ce numéro d'identification de Tag passif avec le numéro du Tag actif se trouvant dans le contenant considéré ;
- on calcule, en tenant compte d'une ou plusieurs données liées au parcours logistique du contenant considéré, aux caractéristiques de structure et d'isolation du contenant considéré, aux données physiques du fluide utilisé, une quantité de fluide à injecter dans le contenant considéré ;
- on ordonne audit pistolet ou moyen d'injection ou à un système de vannes alimentant ledit pistolet ou moyen d'injection, les caractéristiques de l'injection de fluide à réaliser dans le contenant considéré.

7. Procédé selon la revendication 6, **caractérisé en ce que** l'unité d'acquisition et de traitement de données effectue, aussi souvent que nécessaire, de façon programmée ou sur demande spécifique d'un opérateur, un balayage d'un espace donné où est situé le parc de contenants, de façon à faire l'inventaire de tous les contenants présents dans cet espace au travers de tous les Tags actifs associés se trouvant dans cet espace.

8. Procédé selon la revendication 7, **caractérisé en ce que** ledit balayage permet de repérer au sein du parc se trouvant dans l'espace tous les contenants qui sont à l'instant du balayage, inconnus de l'unité et **en ce que** l'unité effectue alors la liste desdits contenants qui lui sont inconnus, en associant à chaque Tag actif repéré le numéro de Tag passif associé pour chaque contenant.
